# EUROPÄISCHE PATENTSCHRIFT

(11) **EP 2 679 442 B1**
(45) Veröffentlichungstag und Bekanntmachung des Hinweises auf die Patenterteilung: **12.12.2018**
(21) Anmeldenummer: 13002602.4
(22) Anmeldetag: 17.05.2013
(51) Int. Cl.: B60P 7/08

(54) **Spannvorrichtung**
Tensioning device
Dispositif tendeur

(30) Priorität: 28.06.2012 AT 7162012
(43) Veröffentlichungstag der Anmeldung: 01.01.2014
(73) Patentinhaber: ABA Hörtnagl GmbH, 6166 Fulpmes (AT)
(72) Erfinder: Hörtnagl, Andreas, 6166 Fulpmes (AT)
(74) Vertreter: Fechner, Thomas

(56) Entgegenhaltungen:
- WO-A1-00/35711
- DD-A5- 82 300
- DE-A1- 2 245 343
- DE-A1- 2 928 028

## Beschreibung

Die vorliegende Erfindung betrifft eine Spannvorrichtung mit zumindest einem Grundkörper und zumindest einem am Grundkörper schwenkbar angeordneten Spannhebel, wobei am Grundkörper zumindest zwei zum lösbaren Festklemmen eines Gurtes am Grundkörper miteinander zusammenwirkende Grundkörperklemmkörper angeordnet sind und am Spannhebel zumindest eine Spannhebelklemmvorrichtung zum lösbaren Festklemmen des Gurtes am Spannhebel angeordnet ist und zumindest einer der Grundkörperklemmkörper bewegbar, insbesondere schwenkbar, am Grundkörper gelagert ist.

Zum Spannen und im gespannten Zustand Halten eines Bandes bzw. Spanngurtes, kommen beim Stand der Technik unterschiedlichste Spannvorrichtungen zum Einsatz. Sie werden z.B. zur Befestigung von Lasten auf oder an Fahrzeugen verwendet. Sie können aber z.B. auch dann zum Einsatz kommen, wenn Gurte oder Spannbänder verlängert bzw. miteinander verbunden werden müssen.

Beim Stand der Technik sind verschiedenste Spannvorrichtungen zum Spannen von Gurten bekannt. Weit verbreitet sind sogenannte Ratschensysteme, bei denen der Gurt durch einen Schlitz in einem Spannbolzen hindurchgeschoben wird und der Spannbolzen dann mittels eines Spannhebels und eines Ratschenmechanismus so lange gedreht wird, bis der Gurt durch Aufwickeln auf dem Spannbolzen gespannt ist. Mit diesen an sich bekannten Spannvorrichtungen können zwar hohe Zugkräfte am Gurt erreicht werden, die Bedienung ist aber in der Regel nicht ganz trivial. So gibt es vor allem dann Probleme, wenn zu viel Gurt auf den Spannbolzen aufgewickelt wird, bevor der Gurt ausreichend gespannt ist. Außerdem gestaltet sich auch das Entspannen einer solchen Spannvorrichtung oft schwierig.

Um das Problem mit dem zu viel auf den Spannbolzen aufgewickelten Gurt zu beheben, sind bereits gattungsgemäße Spannvorrichtungen bekannt, bei denen der Gurt quasi endlos gespannt werden kann, indem man den Spannhebel entsprechend betätigt. Ein Beispiel für eine gattungsgemäße Spannvorrichtung findet sich in der DE 29 28 028 A1.

Beim Spannvorgang mittels Verschwenken des Spannhebels muss bei diesen beim Stand der Technik bekannten gattungsgemäßen Spannvorrichtungen der Gurt zwischen der Spannhebelklemmvorrichtung und den Grundkörperklemmkörpern zunächst so stark gespannt werden, dass die Grundkörperklemmkörper verschwenkt werden und den Gurt zum Hindurchziehen zwischen ihnen freigeben. Im weitgehend gespannten Zustand des Gurtes und bei entsprechend hohen Kräften kann es dabei, bevor die Grundkörperklemmkörper den Gurt zum Weiterspannen freigeben, zu einer erheblichen Längsdehnung des Gurtes zwischen den noch geschlossenen Grundkörperklemmkörpern und der Spannhebelklemmvorrichtung kommen. Im Ergebnis wird dann bei einem Schwenkhub des Spannhebels relativ wenig Gurt zwischen den Grundkörperklemmkörpern hindurchgezogen, da ein Teil der Schwenkbewegung des Spannhebels allein zum Dehnen des Gurtes zwischen den Grundkörperklemmkörpern und der Spannhebelklemmvorrichtung verbraucht wird und keinen Gurttransport bewirkt.

Eine ähnliche Spannvorrichtung der eingangs genannten Art geht auch aus der DE 2 245 343 A1 hervor.

Aufgabe der Erfindung ist es, hierfür bei gattungsgemäßen Spannvorrichtungen eine Verbesserung vorzuschlagen.

Dies wird erreicht, indem der bewegbar am Grundkörper gelagerte Grundkörperklemmkörper zumindest eine Öffnungsnase aufweist, wobei die Öffnungsnase in einer Klemmstellung der Grundkörperklemmkörper zur Umlenkung des Gurtes um die Öffnungsnase in einem Zwischenraum zwischen einer Gurtanlagefläche des anderen Grundkörperklemmkörpers und einer Gurtanlagefläche der Spannhebelklemmvorrichtung angeordnet ist.

Durch die Öffnungsnase und den darum herumgeführten bzw. umgelenkten Gurt erfolgt eine Öffnung bzw. Freigabe des Gurtes seitens der Grundkörperklemmkörper sobald mittels des Spannhebels und der Spannhebelklemmvorrichtung der Spannvorgang des Gurtes beginnt. Hierdurch wird vermieden, dass ein Teil des Spannhubes bzw. der dabei durchgeführten Schwenkbewegung des Spannhebels ausschließlich zum Dehnen des Gurtes zwischen den Grundkörperklemmkörpern und der Spannhebelklemmvorrichtung verbraucht wird. Nahezu der gesamte Weg bzw. Hub des Spannhebels bei seiner Schwenkbewegung kann zum Transport und damit zum Spannen des Gurtes verwendet werden.

Ein besonderer Vorteil der erfindungsgemäßen Spannvorrichtung ist es, dass sie als sogenannte Endlosspannvorrichtung ausgebildet werden kann, bei der der maximale Spannweg des Gurtes nicht wie beim Stand der Technik durch Aufwickeln des Gurtes auf einem Spannbolzen begrenzt ist.

Ein Verfahren zum Spannen eines Gurtes mit einer erfindungsgemäßen Spannvorrichtung sieht vor, dass beim Verschwenken des Spannhebels relativ zum Grundkörper in einer Spannrichtung der Gurt von der Spannhebelklemmvorrichtung am Spannhebel festgeklemmt wird und die Öffnungsnase des bewegbaren Grundkörperklemmkörpers vom Gurt aus dem Zwischenraum herausgedrückt wird und dadurch der bewegbare Grundkörperklemmkörper in eine Freigabestellung bewegt wird, in der der Gurt von den Grundkörperklemmkörpern freigegeben ist.

Ein besonderer Vorteil von erfindungsgemäßen Spannvorrichtungen ist es, dass sie nicht nur zum Spannen eines Gurtes sondern auch zum Spannen von Seilen geeignet sind. In diesem Zusammenhang wird darauf hingewiesen, dass es sich bei einem Gurt um ein Band, also um einen länglichen flexiblen Gegenstand mit einer deutlich höheren Breite als Höhe bzw. Dicke handelt, während ein Seil einen kreisrunden Querschnitt aufweist oder die Dicke zumindest ungefähr in gleicher Größenordnung wie die Breite des Seiles ist.

Bei einem erfindungsgemäßen Verfahren kann dann entsprechend vorgesehen sein, dass anstelle des Gurtes zumindest ein Seil mit der Spannvorrichtung gespannt und/oder festgeklemmt wird. Es wird auch darauf hingewiesen, dass erfindungsgemäße Spannvorrichtungen natürlich so ausgebildet sein können, dass sie gleichzeitig mehrere, z.B. parallel zueinander verlaufende Gurte und/oder Seile spannt.

Bevorzugte Ausgestaltungsformen der Erfindung sehen vor, dass die Spannhebelklemmvorrichtung zumindest zwei zum lösbaren Festklemmen des Gurtes am Spannhebel miteinander zusammenwirkende Spannhebelklemmkörper aufweist. Dabei kann vorgesehen sein, dass zumindest einer der Spannhebelklemmkörper zwischen zumindest einer Klemmstellung und zumindest einer Freigabestellung bewegbar, also schwenkbar und/oder auch verschiebbar gelagert ist.

Um möglichst hohe Reibkräfte und damit Haltekräfte zwischen Gurt und/oder Seil und Grundkörperklemmkörpern und/oder Spannhebelklemmkörpern zu erzeugen, ist es günstig, wenn die Grundkörperklemmkörper und/oder die Spannhebelklemmkörper entsprechend große Gurtanlageflächen für den Gurt haben. Um dies zu erreichen, können die Gurtanlageflächen der Grundkörperklemmkörper und/oder der Spannhebelklemmkörper zumindest bereichsweise gekrümmt ausgebildet sein. Es ist in diesem Sinne auch und/oder zusätzlich möglich, die genannten Gurtanlageflächen als in sich gewellte und/oder gezackte Oberflächen auszubilden. Als Gurtanlageflächen werden dabei die Außenflächen der Grundkörperklemmkörper und/oder der Spannhebelklemmkörper angesehen, an denen in der betriebsgemäßen Verwendung der Gurt zumindest zeitweise anliegt.

Grundsätzlich kann der bewegbare Grundkörperklemmkörper schwenkbar und/oder verschiebbar am Grundkörper gelagert sein. Bevorzugte Ausgestaltungsformen der Erfindung sehen vor, dass der schwenkbare Grundkörperklemmkörper um einen Achsstift schwenkbar am Grundkörper gelagert ist. Dabei kann in gewissen Ausgestaltungsformen vorgesehen sein, dass der Achsstift in zumindest einem Langloch des schwenkbaren Grundkörperklemmkörpers oder des Grundkörpers gelagert ist. In diesem Fall kann der Grundkörperklemmkörper dann sowohl eine Verschwenkbewegung als auch eine Verschiebebewegung ausführen. Für bewegbare Spannhebelklemmkörper und kann das gleiche gelten. Die bewegbaren Grundkörperklemmkörper und/oder die bewegbaren Spannhebelklemmkörper können, in einem Querschnitt gesehen, C-förmig und/oder in Form einer Neun ausgebildet sein. Ihre Schwenkachse bzw. das Loch oder Langloch für den Achsstift um den herum sie schwenkbar sind, kann in bevorzugten Ausgestaltungsformen exzentrisch angeordnet sein, sodass die bewegbaren bzw. schwenkbaren Grundkörperklemmkörper und/oder die bewegbaren bzw. schwenkbaren Spannhebelklemmkörper eine Art einseitigen Hebel oder zumindest auf einer Seite längeren Hebel als auf der der Schwenkachse gegenüber liegenden Seite, bilden. Es kann aber auch vorgesehen sein, dass zumindest einer der Grundkörperklemmkörper und/oder der Spannhebelklemmkörper in seiner Position relativ zum Spannhebel unbewegbar am Grundkörper bzw. Spannhebel fixiert ist. Bei diesen fixierten Grundkörperklemmkörpern bzw. Spannhebelklemmkörpern handelt es sich bevorzugt um das oder die Gegenstücke zu den bewegbaren Grundkörperklemmkörpern bzw. Spannhebelklemmkörpern.

Bei den Spannhebelklemmkörpern kann, wie gesagt, ebenfalls vorgesehen sein, dass zumindest einer der Spannhebelklemmkörper, vorzugsweise um einen Achsstift relativ zum Spannhebel, verschwenkbar am Spannhebel gelagert ist. Vorzugsweise ist dabei vorgesehen, dass der Winkelbereich, um den der Spannhebelklemmkörper relativ zum Spannhebel verschwenkbar ist, begrenzt ist.

Der Spannhebel kann direkt oder aber auch unter Zwischenschaltung eines Verbindungsteils schwenkbar am Grundkörper angeordnet sein. Da der Spannhebel in der Regel nur für den Spannvorgang benötigt wird, sehen besonders bevorzugte Ausgestaltungsformen der Erfindung vor, dass der Spannhebel, vorzugsweise werkzeuglos, abnehmbar am Grundkörper angeordnet ist. Auch dies kann direkt oder eben unter Zwischenschaltung eines Verbindungsteils realisiert werden.

Weitere Merkmale und Einzelheiten bevorzugter Ausgestaltungsformen der Erfindung werden anhand der nachfolgenden Figurenbeschreibung erläutert.

Es zeigen:
Fig. 1 bis 14 Darstellungen zu einem ersten Ausführungsbeispiel einer erfindungsgemäßen Spannvorrichtung;
Fig. 15 bis 26 Darstellungen zu einem zweiten erfindungsgemäßen Ausführungsbeispiel einer Spannvorrichtung;
Fig. 27 und 28 eine weitere Alternative in der Ausgestaltung einer Spannhebelklemmvorrichtung.

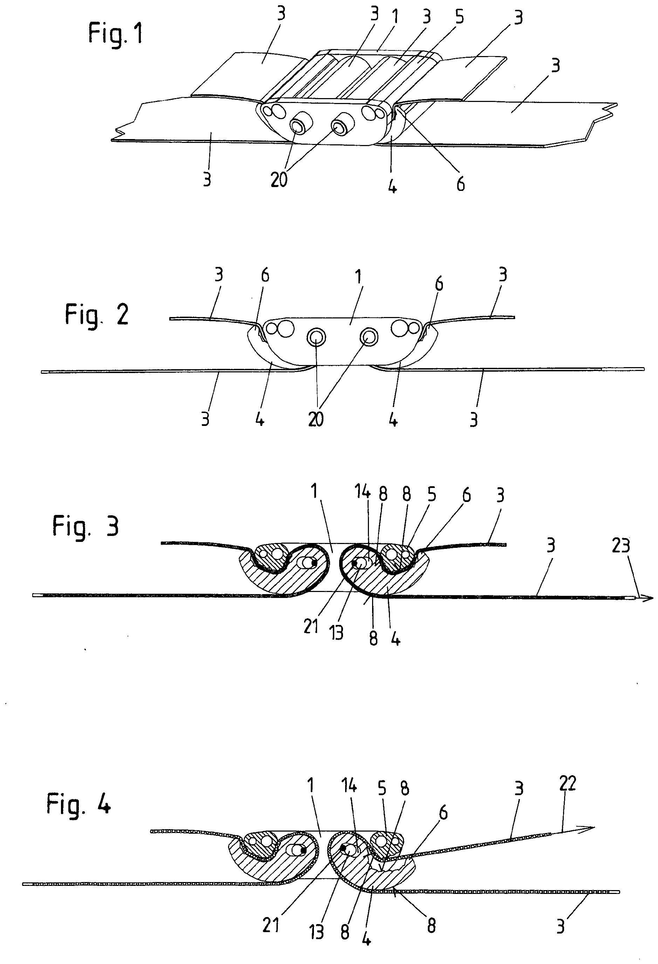

In den Fig. 1 bis 4 ist die Klemmvorrichtung bzw. Gurtschnalle zum Festklemmen des Gurtes 3 im gespannten Zustand gezeigt. In diesem ersten Ausführungsbeispiel ist der Spannhebel 2 zusammen mit einem Verbindungsteil 12 werkzeuglos abnehmbar am Grundkörper 1 befestigbar. In den Fig. 1 bis 4 sind der Spannhebel 2 samt Verbindungsteil 12 vom Grundkörper 1 abgenommen. Außen am Grundkörper 1 befinden sich die Zapfen 20, welche, wie in den nachfolgenden Figuren gezeigt, der Befestigung des Spannhebels 2 mittels der Verbindungseinrichtung 12 am Grundkörper 1 dienen.

Wie bereits in den Fig. 1 bis 4 gut zu erkennen, ist der Grundkörper 1 dieses Ausführungsbeispiels so ausgelegt, dass zwei Gurte 3 am Grundkörper 1 befestigt werden können. Dies muss natürlich nicht zwingend so sein. Entsprechende Spannvorrichtungen bzw. Grundkörper 1 gemäß der Erfindung können auch dazu ausgelegt sein, nur einen oder eben mehr als zwei Gurte 3 zu befestigen. Die Form des Grundkörpers 1 und auch die Anzahl der Grundkörperklemmkörper 4 und 5 kann entsprechend variiert werden. Das Zusammenwirken der Grundkörperklemmkörper 4 und 5 zum Festklemmen des Gurtes 3 am Grundkörper 1 ist in dem ersten Ausführungsbeispiel besonders gut in den beiden Längsschnitten der Fig. 3 und 4 zu erkennen.

Der bewegbare Grundkörperklemmkörper 4 ist in diesem Ausführungsbeispiel schwenkbar am Grundkörper 1 gelagert und annähernd C-förmig ausgebildet. Er besitzt entsprechend gekrümmt ausgebildete Gurtanlageflächen 8, um zum Festhalten des Gurtes 3 möglichst große Kontakt- bzw. Reibungsflächen zur Verfügung zu stellen. Auch die Gurtanlageflächen 8 des anderen Grundkörperklemmkörpers 5 sind bereichsweise gekrümmt ausgebildet. Der Grundkörperklemmkörper 5 ist in seiner Position relativ zum Grundkörper 1 an diesem unbewegbar fixiert. Um die Schwenkbewegung des Grundkörperklemmkörpers 4 zu ermöglichen, ist dieser schwenkbar um den Achsstift 13, welcher fix am Grundkörper 1 angeordnet ist, gelagert. Im ersten Ausführungsbeispiel durchdringt dieser Achsstift 13 ein Langloch 14 im Grundkörperklemmkörper 4, sodass letzterer auch eine Verschiebebewegung ausführen kann. Ein elastischer Vorspannkörper 21 sorgt für eine gewisse Vorspannung zwischen Grundkörper 1 und Grundkörperklemmkörper 4.

Um die Reibung bzw. die Haltekräfte für den Gurt 3 noch weiter zu erhöhen, sind die Gurtanlageflächen 8 der Grundkörperklemmkörper 4 und 5 in diesem Ausführungsbeispiel bereichsweise gewellt oder gezackt ausgebildet.

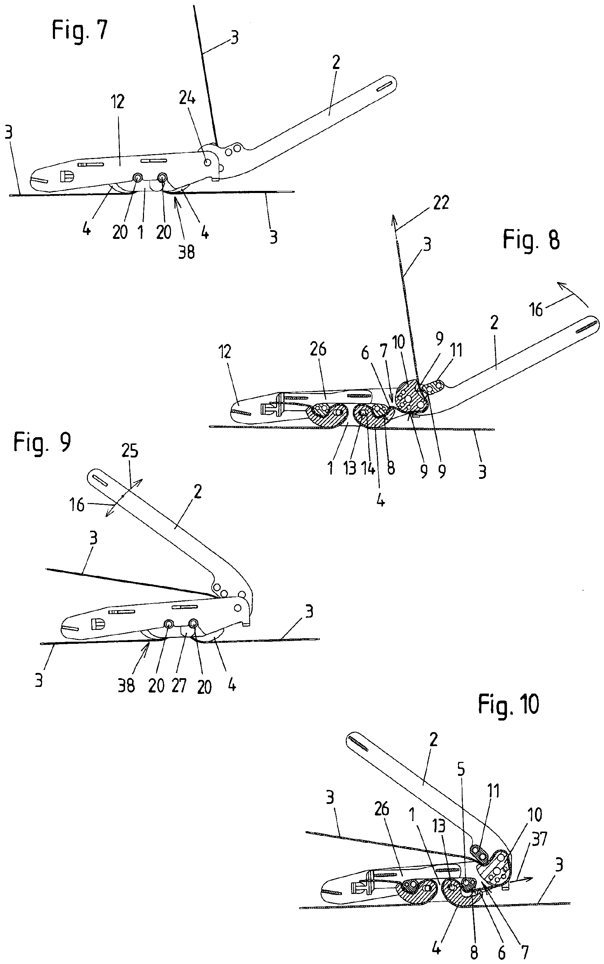

Bei der hier im ersten Ausführungsbeispiel dargestellten Variante befindet sich die Öffnungsnase 6 am schwenkbar gelagerten Grundkörperklemmkörper 4 auf dessen, dem Langloch 14 entgegengesetzten Ende. Die erfindungsgemäße Funktion dieser Öffnungsnase 6 wird weiter unten anhand der Fig. 8 und 10 erläutert.

Fig. 3 zeigt die Klemmstellung, in der der Gurt 3 am Grundkörper 1 festgeklemmt ist, sodass der Gurt 3 bei Zug in Richtung 23, wie in Fig. 3 gezeigt, nicht vom Grundkörper 1 bzw. zwischen den Grundkörperklemmkörpern 5 hindurch abgezogen werden kann. Durch das in den Fig. 3 und 4 besonders gut zu sehende Herumführen des Gurtes um den schwenkbaren Grundkörperklemmkörper 4, wird bei entsprechend starkem Zug in Richtung 23 der schwenkbare Grundkörperklemmkörper 4 besonders stark gegen den Gurt 3 und den fixen Grundkörperklemmkörper 5 gedrückt, sodass die Haltekräfte noch erhöht werden.

Fig. 4 zeigt auf der rechten Seite des Grundkörpers 1, wie der Gurt 3 von Hand in Richtung 22 in der geöffneten Stellung vom Grundkörperklemmkörper 4 und Grundkörperklemmkörper 5 abgezogen werden kann. In dieser geöffneten Stellung ist der Grundkörperklemmkörper 4 etwas vom fixen Grundkörperklemmkörper 5 weggeschwenkt, sodass der Gurt 3 in Richtung 22 zwischen den beiden Grundkörperklemmkörpern 4 und 5 hindurchgezogen werden kann.

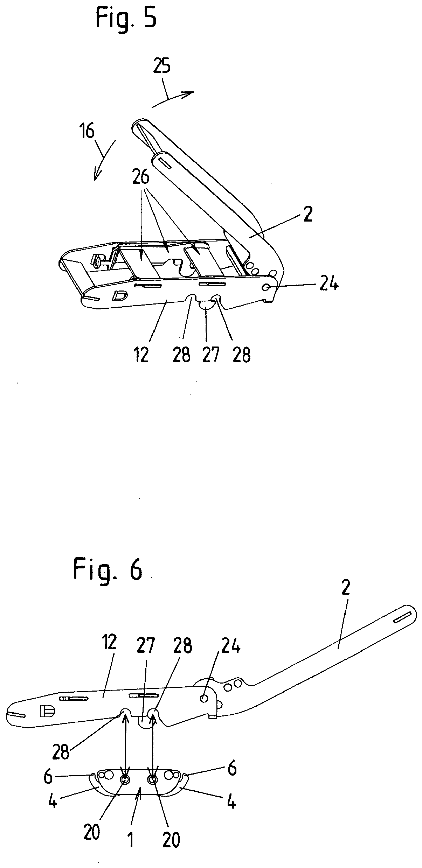

In Fig. 5 sind der Spannhebel 2 und das Verbindungsteil 12 dieses ersten Ausführungsbeispiels einer erfindungsgemäßen Spannvorrichtung losgelöst vom Grundkörper 1 dargestellt. Im gezeigten Ausführungsbeispiel handelt es sich um eine Spannvorrichtung mit einer Klemmvorrichtung zum Festklemmen eines Gurtes 3 in zumindest einem Spannungszustand und einem Spannhebel 2 zur Änderung des Spannungszustandes des Gurtes 3, wobei der Spannhebel 2 mittels einer Verbindungseinrichtung in zumindest einem Betriebszustand abnehmbar am Grundkörper 1 bzw. der Klemmvorrichtung gehalten ist. Die Klemmvorrichtung wird dabei durch den Grundkörper 1 und seine Grundkörperklemmkörper 4 und 5 gebildet. In bevorzugten Ausgestaltungen, wie der hier diskutierten, ist dabei vorgesehen, dass die Verbindungseinrichtung zumindest ein Sicherungselement aufweist, wobei das Sicherungselement zumindest einen Schließzustand aufweist, in dem der Spannhebel 2 an der Klemmvorrichtung bzw. dem Grundkörper 1 fixiert ist und wobei das Sicherungselement zumindest einen geöffneten Zustand aufweist, in dem der Spannhebel 2 von der Klemmvorrichtung bzw. dem Grundkörper 1 abnehmbar ist. In der hier dargestellten Form wird dieses Sicherungselement durch den Fixierungsschlitten 26 mit den Fixierungshaken 27 gebildet. Diese sind in hier nicht näher gezeigter Form federnd verschiebbar am Verbindungsteil 12 gelagert. Am Verbindungsteil 12 befinden sich darüber hinaus auch Zapfenaufnahmen 28, welche der Aufnahme der Zapfen 20 des Grundkörpers 1 dienen, wenn das Verbindungsteil 12 samt Spannhebel 2 für den Spannvorgang am Grundkörper 1 befestigt wird.

In Fig. 6 ist mittels der Doppelpfeile die Verbindung des Verbindungsteils 12 mit dem Grundkörper 1, also das Aufsetzen des Verbindungsteils 12 mit seinen Zapfenaufnahmen 28 auf die Zapfen 20 des Grundkörpers 1 dargestellt. Im aufgesteckten Zustand, in dem sich die Zapfen 20 in den Zapfenaufnahmen 28 befinden, sichert der Fixierungsschlitten 26 mit seinen Fixierungshaken 27 das Verbindungsteil 12 samt Spannhebel 2 in seiner Position am Grundkörper 1. Der Spannhebel 2 dient zum Spannen, also zur Erhöhung des Spannungszustandes des Gurtes 3. Hierzu wird er, wie weiter unten beschrieben und anhand der nachfolgenden Figuren gezeigt, in Spannrichtung 16 geschwenkt. In der Gegenrichtung 25 erfolgt die Rückstellung des Spannhebels 2, damit dann anschließend der nächste Spannhub in Spannrichtung 16 durch Schwenken des Spannhebels 2 um seine Schwenkachse 24 relativ zum Verbindungsteil 12 und damit zum Grundkörper 1 stattfinden kann.

Das Federelement zur Vorspannung des Fixierungsschlittens 26 und damit der Fixierungshaken 27 in Richtung hin zu ihrer Schließzustand ist in Fig. 5 nicht zu sehen. Es kann sich aber z.B. um eine einfache Schraubenfeder handeln die zwischen Fixierungsschlitten 26 und Verbindungsteil 12 in geeigneter Weise angeordnet ist, um den Fixierungsschlitten 26 samt Fixierungshaken 27 in Richtung hin zum Schließzustand vorzuspannen. Auf diese Art und Weise ist die Verbindungseinrichtung mittels des Fixierungsschlittens 26 und dessen Fixierungshaken 27 als eine Schnappverbindungseinrichtung ausgebildet. Solche Schnappverbindungen sind bevorzugt, aber natürlich nicht die einzige Art und Weise, wie man das Verbindungsteil 12 am Grundkörper 1 bzw. an der Klemmvorrichtung befestigen kann. Es sind auch andere Befestigungsmöglichkeiten wie ein einfaches Aufstecken, eine Verschraubung, ein Vernieten oder dergleichen möglich. Darüber hinaus sind natürlich auch Varianten der Erfindung möglich, bei denen der Spannhebel 2 direkt am Grundkörper 1 angebracht ist. In diesen kann dann auf ein entsprechendes Verbindungsteil 12 verzichtet werden. In den Ausführungsvarianten, in denen der Spannhebel 2 direkt am Grundkörper 1 angeordnet ist, ist die Schwenkachse 24 ebenfalls am Grundkörper 1 angeordnet. Der Vollständigkeit halber wird für Varianten mit Verbindungsteilen 12 natürlich auch darauf hingewiesen, dass die Zapfen 20 auch am Verbindungsteil 12 und entsprechenden Zapfenaufnahmen 28 samt Fixierungsschlitten 26 und Fixierungshaken 27 natürlich auch am Grundkörper 1 angeordnet sein können.

Die Fig. 7 und 9 zeigen jeweils eine Stellung, in der das Verbindungsteil 12 samt Spannhebel 2 zum Spannen des Gurtes 3 auf dem Grundkörper 1 aufgeschnappt bzw. angeordnet sind. Die Zapfen 20 des Grundkörpers 1 sind in den Fig. 7 und 9 mittels der Fixierungshaken 27 in den Zapfenaufnahmen 28 eingesperrt. Zum Abnehmen des Spannhebels 2 samt Verbindungsteil 12 vom Grundkörper 1 muss der Fixierungsschlitten 26 samt Fixierungshaken 27 in eine geöffnete Stellung verschoben werden, in der die Zapfen 20 aus den Zapfenaufnahmen 28 herausgenommen werden können.

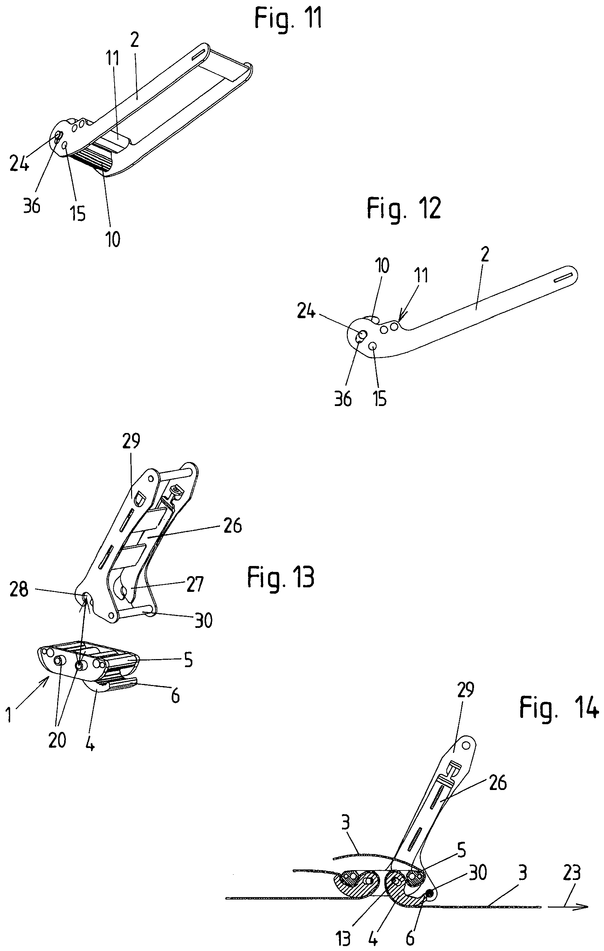

In Fig. 7 ist die Situation am Anfang eines Spannvorgangs dargestellt. Fig. 8 zeigt einen Längsschnitt in dieser Situation. In Fig. 9 ist der Spannhebel 2 in Spannrichtung 16 bereits relativ weit um seine Achse 24 geschwenkt. Gezeigt ist also eine Stellung mitten im Spannvorgang. Fig. 10 zeigt einen Längsschnitt durch die Situation gemäß Fig. 9. In den Fig. 8 und 10 ist auch erstmals die Art der Ausbildung der Spannhebelklemmvorrichtung des ersten Ausführungsbeispiels gut zu sehen. Die Spannhebelklemmvorrichtung weist zwei miteinander zusammenwirkende Spannhebelklemmkörper 10 und 11 auf. Beide Spannhebelklemmkörper 10 und 11 weisen gekrümmte Gurtanlageflächen 9 für den Gurt 3 auf. Dies ergibt wiederum relativ große Reibungsflächen und damit große Klemmkräfte. Der Spannhebelklemmkörper 11 ist fix am Spannhebel 2, also unbeweglich relativ zum Spannhebel 2 an letzterem angeordnet. Der Spannhebelklemmkörper 10 ist um den in den Fig. 11 und 12 sichtbaren Achsstift 15 verschwenkbar am Spannhebel 2 befestigt. Diese Verschwenkbarkeit des Spannhebelklemmkörpers 10 relativ zum Spannhebel 2 kann bei der gezeigten Variante nur über einen begrenzten Winkelbereich erfolgen. Dies wird in diesem Ausführungsbeispiel so realisiert, dass der am Spannhebelklemmkörper 10 befestigte Stift 24, welcher gleichzeitig die Schwenkachse 24 des Spannhebels 2 relativ zum Verbindungsteil 12 und damit zum Grundkörper 1 bildet, in einem, in seiner Länge begrenzten Langloch 36 im Spannhebel 2 geführt ist. Die Schwenkachse 24 dient also einerseits als Schwenkachse zwischen Spannhebel 2 und Verbindungsteil 12 und andererseits als Teil der Winkelbegrenzung für die Verschwenkbarkeit des Spannhebelklemmkörpers 10 relativ zum Spannhebel 2.

Im Folgenden wird der erfindungsgemäße Spannvorgang anhand eines Vergleichs der Fig. 8 und 10 geschildert. Ausgegangen wird dabei vom Zustand gemäß Fig. 8. In diesem befinden sich die beiden Grundkörperklemmkörper 4 und 5 in ihrer Klemmstellung, in der sie, wie eingangs geschildert, den Gurt 3 festklemmen. Die Öffnungsnase 6, um welche der Gurt 3 herumgeführt bzw. umgelenkt ist, befindet sich in einem Zwischenraum 7 zwischen der Gurtanlagefläche 8 des Grundkörperklemmkörpers 5 und einer Gurtanlagefläche 9 der Spannhebelklemmvorrichtung hier des schwenkbaren Spannhebelklemmkörpers 10. In der in Fig. 8 dargestellten Ausgangsstellung zu Beginn eines Klemmhubes bzw. Schwenkvorgangs in Spannrichtung 16 ist die Spannhebelklemmvorrichtung geöffnet, der Gurt 3 kann in der in Fig. 8 eingezeichneten Richtung 22 zwischen den Spannhebelklemmkörpern 10 und 11 hindurchgezogen werden. Wird nun ausgehend von Fig. 8 zur Einleitung eines Spannhubes bzw. Spannvorgangs der Spannhebel 2 in Spannrichtung 16 um seine Schwenkachse 24 geschwenkt, so wird der Gurt 3 zwischen den Spannhebelklemmkörpern 10 und 11 festgeklemmt und in der in Fig. 10 eingezeichneten Richtung 37 gezogen. Dies hat zur Folge, dass die Öffnungsnase 6 von dem um sie herumgeführten Gurt 3 aus dem Zwischenraum 7 herausgedrückt wird, wodurch der Grundkörperklemmkörper 4 in eine Freigabestellung geschwenkt wird, in der der Gurt 3 von den Grundkörperklemmkörpern freigegeben, also nicht mehr geklemmt ist. Diese Situation ist beispielhaft in Fig. 10 dargestellt. Hierdurch wird, wie eingangs erläutert, erreicht, dass die Grundkörperklemmkörper 4 und 5 beim Spannhub rasch öffnen und somit ein großer Teil des Schwenkweges in Spannrichtung 16 tatsächlich zum Nachspannen bzw. Nachziehen des Gurtes 3 in Richtung 37 verwendet wird und nicht durch Dehnen des Gurtes 3 verloren geht. Hierdurch wird pro Spannhub also immer ein relativ großes Stück des Gurtes 3 transportiert, womit pro Spannhub eine relativ große Erhöhung der Spannung des Gurtes 3 erzielt werden kann. Am Ende des Spannhubes kann der Spannhebel 2 in Spannrichtung 16 nicht mehr weiter verschwenkt werden. Er wird dann zur Vorbereitung des nächsten Spannhubes in Gegenrichtung 25 in die Stellung gemäß Fig. 8 zurückgeschwenkt. Das Band 3 kann dann in Richtung 22 soweit notwendig von Hand zwischen den geöffneten Spannhebelklemmkörpern 10 und 11 nachgezogen werden, während die Grundkörperklemmkörper 4 und 5 in ihrer Klemmstellung gemäß Fig. 8 den Gurt 3 in der gespannten Stellung halten. Der geschilderte Spannvorgang kann so oft wiederholt werden wie es für das Spannen des Gurtes 3 notwendig ist, sodass eine Art Endlosspannvorrichtung geschaffen ist, bei der der maximal mögliche Spannweg des Gurtes 3 nicht wie beim eingangs geschilderten Stand der Technik mittels der bisher oft verwendeten Ratschensysteme beschränkt ist.

Wie besonders gut in den Fig. 7 und 9 zu sehen, ist im gezeigten Ausführungsbeispiel der Spannvorrichtung vorgesehen, dass die Klemmvorrichtung in Form des Grundkörpers 1 in dem Betriebszustand, in dem der Spannhebel 2 am Grundkörper 1 gehalten ist, mit einer Gurtführungsseite 38 auf zumindest einer Seite der Spannvorrichtung über alle anderen Bauteile der Spannvorrichtung übersteht. Dies hat den Vorteil, dass die Spannvorrichtung ausschließlich unter Zwischenschaltung des Gurtes 3 mit dem Gegenstand in Kontakt tritt, über welchen der Gurt 3 gespannt wird. Hierdurch wird bewirkt, dass die Bauteile der Spannvorrichtung, also insbesondere auch das Verbindungsteil 12 diesen Gegenstand, über den der Gurt 3 gespannt ist, nicht zerkratzen oder anderweitig beschädigen können.

Nach Beendigung des Spannvorgangs kann der Spannhebel 2 samt Verbindungsteil 12 durch Betätigung des Fixierungsschlittens 26 entsprechend vom Grundkörper 1 und damit von der Klemmvorrichtung abgenommen werden. Der Spannhebel 2 kann dann zum Spannen anderer Gurte an anderen Klemmvorrichtungen verwendet werden.

In der Praxis erweist es sich oft als schwierig oder sehr kraftaufwendig, einen entsprechend in der Klemmstellung am Grundkörper festgespannten Gurt 3 wieder zu lösen. Dies gilt insbesondere dann, wenn der Spannvorgang mittels Spannhebel 2 durchgeführt wurde. Um das Lösen der Grundkörperklemmkörper 4 aus ihrer Klemmstellung zu vereinfachen, können sogenannte Lösehebel 29 eingesetzt werden. Auch diese Lösehebel 29 können, wie die Spannhebel 2, abnehmbar am Grundkörper 1 befestigbar sein. Es kann sich ebenso um eine Verbindungseinrichtung wie beim Spannhebel 2 handeln, welche einen Schließzustand aufweist, in dem der Lösehebel 29 an der Klemmvorrichtung bzw. am Grundkörper 1 fixiert ist und wobei im geöffneten Zustand der Verbindungseinrichtung der Lösehebel 29 wiederum von der Klemmvorrichtung bzw. dem Grundkörper 1 abnehmbar ist.

In den Fig. 13 und 14 ist ein Ausführungsbeispiel eines solchen Lösehebels gezeigt. Auch dieser wird mittels des Fixierungsschlittens 26 und der Zapfenaufnahme 28 auf den Zapfen 20 des Grundkörpers 1 befestigt. Die jeweiligen Zapfen 20 bilden dann auch die Schwenkachse, um die der Lösehebel 29 relativ zum Grundkörper 1 verschwenkt wird. Wie besonders gut in dem Längsschnitt gemäß Fig. 14 zu sehen ist, weist der Lösehebel 29 einen Lösesteg 30 auf, mit dem er zum Öffnen der Klemmverbindung zwischen den Grundkörperklemmkörpern 4 und 5 auf die Öffnungsnase 6 des schwenkbar gelagerten Grundkörperklemmkörpers 4 einwirkt. Im geöffneten Zustand der Grundkörperklemmkörper 4 und 5 kann dann der Gurt 3 in Richtung 23 vom Grundkörper 1 und damit von der Klemmvorrichtung abgezogen werden. Die lösbare Befestigung des Lösehebels 29 am Grundkörper 1 erfolgt in analoger Weise wie die des Verbindungsteils 12 am Grundkörper 1. Entsprechend analog ist auch hier der Fixierungsschlitten 26 mit der hier nicht dargestellten Federbelastung ausgebildet.

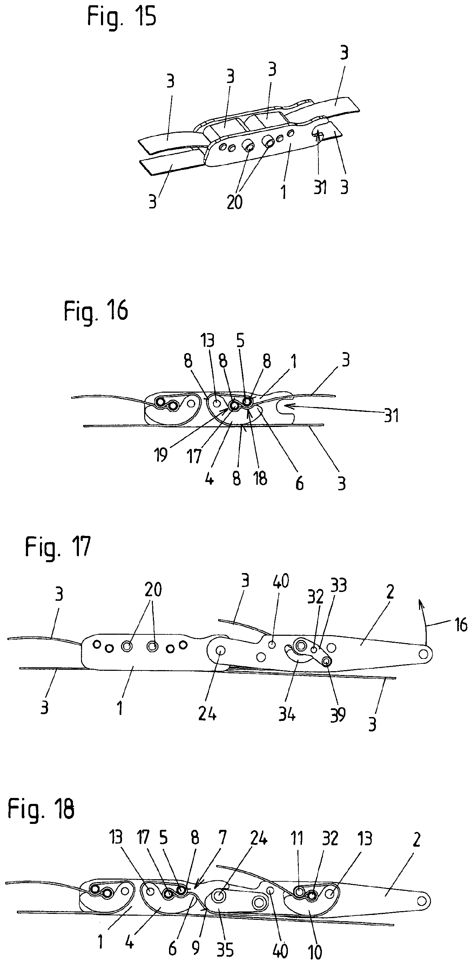

Die Fig. 15 bis 26 zeigen eine zweite erfindungsgemäße Ausgestaltungsform einer Spannvorrichtung. In den Fig. 15 und 16 ist wiederum die Situation gezeigt, in der der Spannhebel 2 von der Klemmvorrichtung bzw. ihrem Grundkörper 1 abgenommen ist, wobei Fig. 15 eine perspektivische Darstellung und Fig. 16 ein Längsschnitt zeigt. Bei allen im Folgenden als Längsschnitt bezeichneten Darstellungen handelt es sich um Seitenansichten, bei denen jeweils eine Seitenwange des Grundkörpers 1 bzw. des Spannhebels 2 abgenommen bzw. nicht dargestellt ist, sodass die dahinterliegenden Bauteile sichtbar werden. Auch bei dieser Varianten können gleichzeitig zwei Gurte 3 am Grundkörper 1 bzw. an der Klemmvorrichtung festgeklemmt werden. Auch dies ist natürlich nur ein Beispiel. Es kann sich um Klemmvorrichtungen für nur einen Gurt 3 oder auch für mehr als zwei Gurte handeln.

Ein erster wesentlicher Unterschied zum ersten Ausführungsbeispiel besteht in der Ausbildung und Anzahl der Grundkörperklemmkörper 4, 5 und 17. Wie besonders gut in der Schnittdarstellung gemäß Fig. 16 zu sehen, ist bei dieser Klemmvorrichtung zum Festklemmen eines Gurtes 3 vorgesehen, dass am Grundkörper 1 der Klemmvorrichtung zumindest zwei als Steg zum Herumwickeln des Gurtes 3 ausgebildete Grundkörperklemmkörper 5 und 17 angeordnet sind, wobei am Grundkörper 1 zusätzlich zumindest ein dritter, als relativ zum Grundkörper 1 schwenkbarer Hebel ausgebildeter Grundkörperklemmkörper 4 angeordnet ist, wobei der dritte Grundkörperklemmkörper 4 in eine Klemmstellung zum Einklemmen des Gurtes zwischen den als Steg ausgebildeten Grundkörperklemmkörpern 5 und 17 und dem dritten Grundkörperklemmkörper 4 schwenkbar ist. Hierdurch wird erreicht, dass in der, in Fig. 16 dargestellten Klemmstellung der schwenkbare Grundkörperklemmkörper 4 den Gurt 3 gegen die beiden als Steg ausgebildeten Grundkörperklemmkörper 5 und 17 drückt. Durch die Verwendung von zwei als Steg ausgebildeten Grundkörperklemmkörpern 5 und 17 ist es möglich, wie in Fig. 16 zu sehen, dass der Gurt zwischen mindestens einem der als Steg ausgebildeten Grundkörperklemmkörper 5 und 17, hier dem Grundkörperklemmkörper 5 und dem dritten, also dem schwenkbaren Grundkörperklemmkörper 4 doppelt und an sich selbst anliegend verläuft. Durch dieses Gurt-auf-Gurt-Aufliegen, werden besonders hohe Klemmkräfte erreicht, welche durch das Andrücken des Gurtes 3 mittels des schwenkbaren Grundkörperklemmkörpers 4 noch verstärkt wird. Die beiden als Steg zum Herumwickeln des Gurtes 3 ausgebildeten Grundkörperklemmkörper 5 und 17 weisen hier einen kreisrunden Querschnitt auf, was aber nicht zwingend vorgesehen sein muss. Durch die in der Fig. 16 besonders gut zu sehende Möglichkeit des Herumführens des Gurtes 2 um diese beiden stegartigen Grundkörperklemmkörper 5 und 17 und das zusätzliche Andrücken mittels des dritten Grundkörperklemmkörpers 4 werden besonders hohe Halte- und Klemmkräfte erreicht. Bevorzugte Ausgestaltungsformen, wie die hier gezeigte, sehen darüber hinaus vor, dass der dritte verschwenkbare Grundkörperklemmkörper 4 Ausnehmungen 18 und 19 zur zumindest teilweisen Aufnahme des Gurtes 3 und jeweils eines der als Steg ausgebildeten Grundkörperklemmkörper 5 und 17 aufweist. Hierdurch werden die Klemmkräfte nochmals erhöht, genauso wie durch die zumindest bereichsweise, vorzugsweise vollständig, gekrümmten Gurtanlageflächen 8 der Grundkörperklemmkörper 4, 5 und 17. In Summe werden hierdurch sehr hohe Haltekräfte erreicht, ohne dass es noch notwendig ist, die Gurtanlageflächen 8 aufgeraut, also mit Rippen oder Wellen oder dergleichen, auszubilden. Hierdurch wird der Gurt 3 langfristig geschont und seine Lebensdauer erhöht. Der schwenkbare Grundkörperklemmkörper 4 ist in diesem Ausführungsbeispiel um einen fixen Achsstift 13 schwenkbar gelagert. Günstigerweise verlaufen der Achsstift 13 sowie die als Steg ausgebildeten Grundkörperklemmkörper 4 und 5 parallel zueinander.

In Fig. 17 und Fig. 18 ist an diesen Grundkörper 1 bzw. diese Klemmvorrichtung gemäß der Fig. 15 und 16 ein Spannhebel 2 zum Spannen, also zur Erhöhung der Spannkräfte am Gurt 3 angesetzt. In diesem zweiten Ausführungsbeispiel ist hierzu ein einfaches, in Form einer einseitig offenen Ausnehmung ausgebildetes Schwenkachslager 31 am Grundkörper 1 ausgeführt, in das die Schwenkachse 24 des Spannhebels 2 einfach eingesteckt werden kann. Auch hierbei handelt es sich also um einen lösbar am Grundkörper 1 befestigbaren Spannhebel 2, wobei allerdings auf eine Verbindungseinrichtung mit einem zusätzlichen Sicherungselement gemäß des Fixierungsschlittens 26 mit den Fixierungshaken 27 gemäß des ersten Ausführungsbeispiels verzichtet wurde. In diesem zweiten Ausführungsbeispiel wird die Schwenkachse 24 eben einfach nur in das Schwenkachslager 31 eingesteckt. Natürlich könnte auch in diesem zweiten Ausführungsbeispiel eine entsprechende Verbindungseinrichtung mit einem zusätzlichen Sicherungselement realisiert werden.

Wie besonders gut im Längsschnitt gemäß Fig. 18 zu sehen, weist der Spannhebel 2 dieses Ausführungsbeispiels eine Umlenkkulisse 35 auf, welche eine exzentrisch bezüglich der Schwenkachse 24 angeordnete Gurtanlagefläche 9 für den Gurt 3 aufweist. Diese Art der Exzentrizität kann natürlich auch bei anderen Ausführungsbeispielen wie z.B. dem oben geschilderten ersten Ausführungsbeispiel durch entsprechende Ausformung des Spannhebelklemmkörpers 10 realisiert werden, wobei dort dann dieselben Effekte mittels der Exzentrizität erreicht werden können, wie sie hier im Folgenden erläutert werden. Die Öffnungsnase 6 des schwenkbar angeordneten Grundkörperklemmkörpers 4 ist in der Klemmstellung gemäß Fig. 18 der Grundkörperklemmkörper 4 und 5 zur Umlenkung des Gurtes 3 um die Öffnungsnase 6 ebenso in einem Zwischenraum 7 zwischen einer Gurtanlagefläche 8 des Grundkörperklemmkörpers 5 und einer Gurtanlagefläche 9 der Spannhebelklemmvorrichtung angeordnet, wie im ersten Ausführungsbeispiel. Hierdurch wird in analoger Weise, wie anhand der Fig. 8 und 10 beim ersten Ausführungsbeispiel geschildert, beim Spannvorgang, also beim Verschwenken des Spannhebels 2 in Spannrichtung 16 eine Öffnung, also ein Wegschwenken des Grundkörperklemmkörpers 4 von den anderen beiden Grundkörperklemmkörpern 5 und 17 erreicht, wodurch der Gurt 3 in analoger Weise gespannt werden kann, ohne zwischen den Grundkörperklemmkörpern 4, 5 und 17 und der Spannhebelklemmvorrichtung unnötig gedehnt zu werden. Dieser Effekt des raschen Öffnens mittels der Öffnungsnase 6 wird, in diesem wie auch anderen bevorzugten Ausführungsbeispielen, durch die Exzentrizität der Umlenkkulisse 35 bzw. deren Gurtanlagefläche 9 bezüglich der Schwenkachse 24 noch verstärkt. In diesem Sinne ist es günstig, wie hier auch realisiert, dass der Gurt 3 durch die Exzentrizität der Umlenkkulisse 35 bzw. deren Gurtanlagefläche 9 am Beginn des Spannhubes des Spannhebels 2, wenn sich die Grundkörperklemmkörper 4, 5 und 17 in ihrer Klemmstellung befinden, stärker um die Öffnungsnase 6 umgelenkt wird, als wenn der Gurt 3 direkt auf der Schwenkachse 24 verlaufen würde. Die gewählte Exzentrizität der Gurtanlagefläche 9 der Umlenkkulisse 35 hat weiters den Vorteil, dass die Grundkörperklemmkörper 4, 5 und 17 am Ende des Spannhubes des Spannhebels 2 schneller wieder in ihre Klemmstellung zurück finden. Hierdurch wird verhindert, dass beim Zurückschwenken des Spannhebels 2 in Gegenrichtung 25 Spannweg verloren geht. Außerdem reduziert die Exzentrizität der Gurtanlagefläche 9 der Umlenkkulisse 35 die während des Spannhubes benötigte Handkraft des Benutzers.

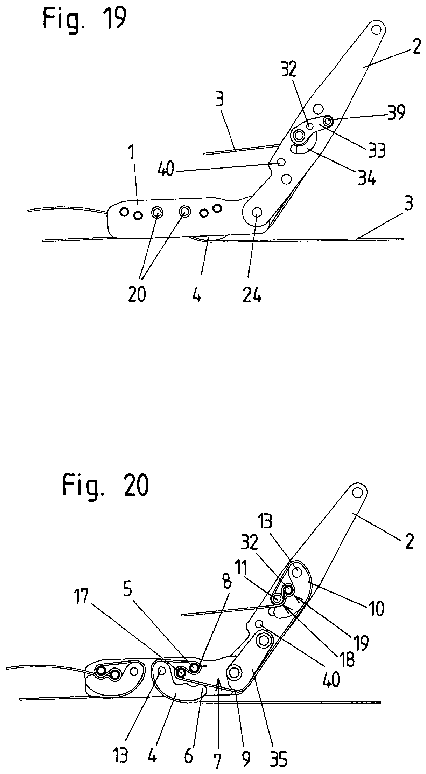

Fig. 20, welche einen Längsschnitt durch die Situation gemäß Fig. 19 zeigt, stellt eine Situation während des Spannhubes des Spannhebels 2 in Spannrichtung 16 dar, bei der die Öffnungsnase 6 des schwenkbaren Grundkörperklemmkörpers 4 vom Gurt 3 bereits aus dem Zwischenraum 7 herausgedrückt und dadurch der schwenkbare Grundkörperklemmkörper 4 in eine Freigabestellung geschwenkt wurde, in der der Gurt 3 zwischen den Grundkörperklemmkörpern 4, 5 und 17 hindurchgezogen werden kann.

Ein weiterer Unterschied dieses zweiten Ausführungsbeispiels zum ersten Ausführungsbeispiel liegt in der Ausgestaltungsform der Spannhebelklemmvorrichtung. Diese weist im zweiten Ausführungsbeispiel analog zu den Grundkörperklemmkörpern 4, 5 und 17 ausgebildete Spannhebelklemmkörper 10, 11 und 32 auf. Die Funktionsweise dieser Spannhebelklemmvorrichtung entspricht dem Zusammenwirken der Grundkörperklemmkörper 4, 5 und 17 ebenso wie der jeweilige Aufbau. Auch hier drückt der schwenkbar am Spannhebel 2 gelagerte Spannhebelklemmkörper 10 in der Klemmstellung den Gurt 3 gegen die beiden anderen Spannhebelklemmkörper 11 und 32. Auch hier liegt der Gurt 3 direkt an sich selbst an, wodurch in Summe besonders hohe Klemmkräfte in der Klemmstellung erreicht werden. In diesem Sinne kann also auch der Spannhebel 2 dieses Ausführungsbeispiels als eine Klemmvorrichtung zum Festklemmen eines Gurtes 3 angesehen werden, wobei die Klemmvorrichtung einen Grundkörper in Form der entsprechenden Abschnitte des Spannhebels 2 aufweist, an dem zumindest zwei als Steg zum Herumwickeln des Gurtes 3 ausgebildete Grundkörperklemmkörper, hier in Form der Spannhebelklemmkörper 11 und 32 angeordnet sind, wobei am Grundkörper in Form des Spannhebels 2 zumindest ein dritter als relativ zum Spannhebel 2 schwenkbarer Hebel ausgebildeter Grundkörperklemmkörper in Form des Spannhebelklemmkörpers 10 angeordnet ist, wobei dieser dritte Grundkörperklemmkörper in Form des Spannhebelklemmkörpers 10 in eine Klemmstellung zum Einklemmen des Gurtes 3 zwischen den als Steg ausgebildeten Spannhebelklemmkörpern 11 und 32 und dem dritten Spannhebelklemmkörper 10 schwenkbar ist.

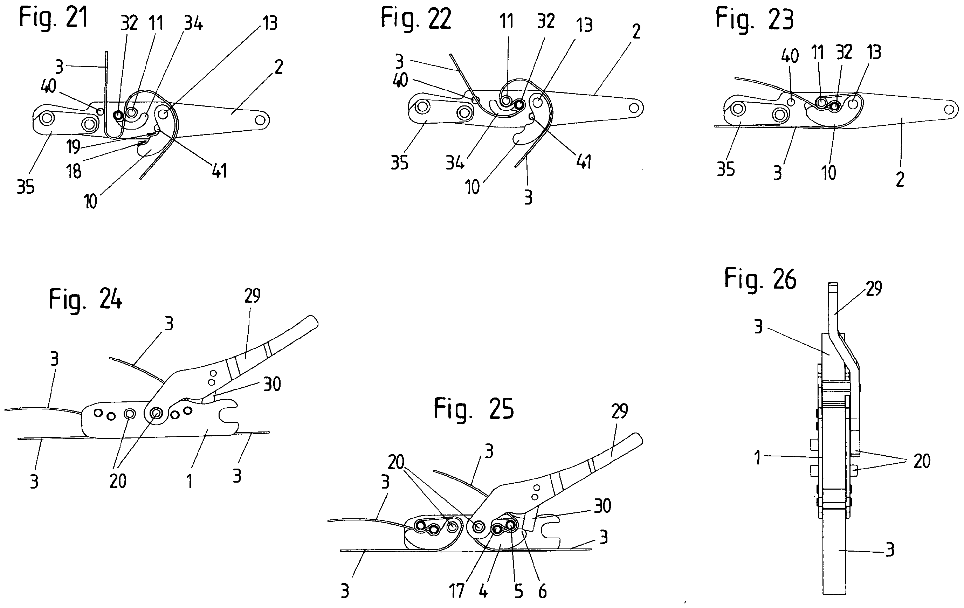

Um das Einfädeln des Gurtes zwischen den drei Grundkörperklemmkörpern 4, 5 und 17 bzw. den Spannhebelklemmkörpern 10, 11 und 32 zu erleichtern, kann zumindest einer der als Steg ausgebildeten Grundkörperklemmkörper bzw. Spannhebelklemmkörper 32 in seiner Position relativ zum Grundkörper 1 bzw. Spannhebel 2 verstellbar am Grundkörper gelagert sein. Im hier gezeigten Ausführungsbeispiel ist dies beispielhaft am Spannhebel 2 bzw. an der Spannhebelklemmvorrichtung realisiert, indem der als Steg ausgebildete Spannhebelklemmkörper 32 mittels des Schwenkhebels 33 im Langloch 34 verschwenkt werden kann. Fig. 21 zeigt dabei die Stellung des Spannhebelklemmkörpers 32, in der der Gurt 3 besonders einfach zwischen den Spannhebelklemmkörpern 10, 11 und 32 hindurchgefädelt werden kann. In Fig. 22 ist der verstellbare Spannhebelklemmkörper 32 wieder in seine Betriebsstellung zurückgeschwenkt, in der er zwischen dem fixen stegartig ausgebildeten Spannhebelklemmkörper 11 und dem Achsstift 13 des schwenkbaren Spannhebelklemmkörpers 10 angeordnet ist. Fig. 23 zeigt die Klemmstellung, in der der schwenkbare Spannhebelklemmkörper den Gurt 3 gegen die beiden stegartig ausgebildeten Spannhebelklemmkörper 11 und 32 drückt. Günstig ist es dabei, wenn einer dieser als Steg ausgebildeten, verstellbaren Grundkörperklemmkörper bzw. hier Spannhebelklemmkörper 32 in zumindest einer Position arretierbar ist. Vorzugsweise handelt es sich dabei um die Position, in der er zum Festklemmen des Gurtes angeordnet ist. Alternativ oder zusätzlich kann dieser verstellbare Grundkörperklemmkörper bzw. hier Spannhebelklemmkörper 32 z.B. aber auch in seiner Position, in der er zum Einfädeln des Gurtes angeordnet ist, arretierbar sein.

Im hier gezeigten zweiten Ausführungsbeispiel ist der als Steg ausgebildete, verstellbare Spannhebelklemmkörper 32 in seinen zwei Endlagen arretierbar. Es handelt sich dabei einerseits um die Position, in der er zum Festklemmen des Gurtes 3 angeordnet ist. Zusätzlich kann dieser verstellbare Spannhebelklemmkörper 32 aber auch in seiner Position, in der er zum Einfädeln des Gurtes 3 angeordnet ist, arretiert werden. Im gezeigten Ausführungsbeispiel wird dies durch einen mittels einer Feder vorgespannten Raststift erreicht. Dieser befindet sich am Griffteil 39 des Schwenkhebels 33 und rastet in den genannten Endlagen in die Löcher 40 und 41 ein, um die gewünschte Arretierung des Spannhebelklemmkörpers 32 entsprechend zu erreichen. Zum Lösen dieser Arretierung wird am Griffteil 39 so gezogen, dass der hier nicht sichtbare Raststift aus dem jeweiligen Loch 40 bzw. 41 herausgezogen und damit die Arretierung aufgehoben wird.

Die Fig. 24, 25 und 26 zeigen einen Lösehebel 29 für dieses Ausführungsbeispiel. Dieser wird seitlich auf einen der Zapfen 20 aufgesteckt. Er weist ebenfalls einen Lösesteg 30 auf, mit dem er zum Öffnen auf die Öffnungsnase 6 des schwenkbaren Grundkörperklemmkörpers 4 einwirkt. In der Draufsicht gemäß Fig. 26 ist besonders gut die einseitige Befestigung des Lösehebels 29 dieses Ausführungsbeispiels zu sehen.

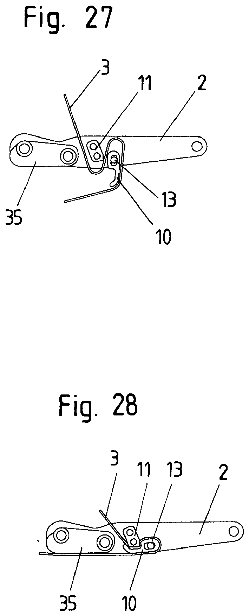

In den Fig. 27 und 28 ist noch einmal eine alternative Ausgestaltungsform einer Spannhebelklemmvorrichtung gezeigt. In dieser Variante wirken wiederum nur zwei Spannhebelklemmkörper 10 und 11 zusammen. Der Spannhebelklemmkörper 11 ist wiederum fix, also in seiner Position unverrückbar am Spannhebel 2 angeordnet. Der Spannhebelklemmkörper 10 ist um den Achsstift 13 herum schwenkbar am Spannhebel 2 angeordnet. Der Achsstift 13 durchdringt ein Langloch 14 im Spannhebelklemmköper 10. Letzterer ist im Querschnitt in Form einer Neun ausgebildet. Fig. 28 zeigt die Klemmstellung, Fig. 27 die geöffnete Stellung, in der der Gurt zwischen den Spannhebelklemmkörpern 10 und 11 hindurchgezogen werden kann.

Abschließend ist noch darauf hinzuweisen, dass auch wenn alle drei hier im Detail geschilderten Ausführungsbeispiele sich auf die Verwendung mit einem Gurt 3 beziehen, die erfindungsgemäßen Spannvorrichtungen dennoch durchaus auch zum entsprechenden Spannen von Seilen geeignet sind.

**Legende zu den Hinweisziffern:**

| | | | |
|---|---|---|---|
| 1 | Grundkörper | 22 | Richtung |
| 2 | Spannhebel | 23 | Richtung |
| 3 | Gurt | 24 | Schwenkachse |
| 4 | Grundkörperklemmkörper | 25 | Gegenrichtung |
| 5 | Grundkörperklemmkörper | 26 | Fixierungsschlitten |
| 6 | Öffnungsnase | 27 | Fixierungshaken |
| 7 | Zwischenraum | 28 | Zapfenaufnahme |
| 8 | Gurtanlagefläche | 29 | Lösehebel |
| 9 | Gurtanlagefläche | 30 | Lösesteg |
| 10 | Spannhebelklemmkörper | 31 | Schwenkachslager |
| 11 | Spannhebelklemmkörper | 32 | Spannhebelklemmkörper |
| 12 | Verbindungsteil | 33 | Schwenkhebel |
| 13 | Achsstift | 34 | Langloch |
| 14 | Langloch | 35 | Umlenkkulisse |
| 15 | Achsstift | 36 | Langloch |
| 16 | Spannrichtung | 37 | Richtung |
| 17 | Grundkörperklemmkörper | 38 | Gurtführungsseite |
| 18 | Ausnehmung | 39 | Griffteil |
| 19 | Ausnehmung | 40 | Loch |
| 20 | Zapfen | 41 | Loch |
| 21 | Vorspannkörper | | |

## Patentansprüche

1. Spannvorrichtung mit zumindest einem Grundkörper (1) und zumindest einem am Grundkörper (1) schwenkbar angeordneten Spannhebel (2), wobei am Grundkörper (1) zumindest zwei zum lösbaren Festklemmen eines Gurtes (3) am Grundkörper (1) miteinander zusammenwirkende Grundkörperklemmkörper (4, 5) angeordnet sind und am Spannhebel (2) zumindest eine Spannhebelklemmvorrichtung zum lösbaren Festklemmen des Gurtes (3) am Spannhebel (2) angeordnet ist und zumindest einer der Grundkörperklemmkörper (4) bewegbar, vorzugsweise schwenkbar, am Grundkörper (1) gelagert ist, **dadurch gekennzeichnet, dass** der bewegbar am Grundkörper (1) gelagerte Grundkörperklemmkörper (4) zumindest eine Öffnungsnase (6) aufweist, wobei die Öffnungsnase (6) in einer Klemmstellung der Grundkörperklemmkörper (4, 5) zur Umlenkung des Gurtes (3) um die Öffnungsnase (6) in einem Zwischenraum (7) zwischen einer Gurtanlagefläche (8) des anderen Grundkörperklemmkörpers (5) und einer Gurtanlagefläche (9) der Spannhebelklemmvorrichtung angeordnet ist.

2. Spannvorrichtung nach Anspruch 1, **dadurch gekennzeichnet, dass** die Spannhebelklemmvorrichtung zumindest zwei zum lösbaren Festklemmen des Gurtes (3) am Spannhebel (2) miteinander zusammenwirkende Spannhebelklemmkörper (10,11) aufweist.

3. Spannvorrichtung nach Anspruch 1 oder 2, **dadurch gekennzeichnet, dass** der Spannhebel (2) direkt oder unter Zwischenschaltung eines Verbindungsteils (12) schwenkbar, vorzugsweise werkzeuglos abnehmbar, am Grundkörper (1) angeordnet ist.

4. Spannvorrichtung nach einem der Ansprüche 1 bis 3, **dadurch gekennzeichnet, dass** die Gurtanlageflächen (8, 9) der Grundkörperklemmkörper (4, 5) und/oder der Spannhebelklemmkörper (10, 11) zumindest bereichsweise gekrümmt ausgebildet sind und/oder als in sich gewellte oder gezackte Oberflächen ausgebildet sind.

5. Spannvorrichtung nach einem der Ansprüche 1 bis 4, **dadurch gekennzeichnet, dass** der bewegbare Grundkörperklemmkörper (4) und/oder der bewegbare Spannhebelklemmkörper (10) um einen Achsstift (13) schwenkbar gelagert ist bzw. sind, wobei vorzugsweise vorgesehen ist, dass der Achsstift (13) in zumindest einem Langloch (14) des bewegbaren Grundkörperklemmkörpers (4) oder des Grundkörpers (1) bzw. des bewegbaren Spannhebelklemmkörpers (10) oder des Spannhebels (2) gelagert ist.

6. Spannvorrichtung nach einem der Ansprüche 1 bis 5, **dadurch gekennzeichnet, dass** der bewegbare Grundkörperklemmkörper (4) und/oder der bewegbare Spannhebelklemmkörper (10) in einem Querschnitt gesehen c-förmig und/oder in Form einer Neun ausgebildet ist bzw. sind.

7. Spannvorrichtung nach einem der Ansprüche 2 bis 6, **dadurch gekennzeichnet, dass** zumindest einer der Grundkörperklemmkörper (5) und/oder der Spannhebelklemmkörper (11) in seiner Position relativ zum Grundkörper (1) bzw. Spannhebel (2) unbewegbar am Grundkörper (1) bzw. Spannhebel (2) fixiert ist.

8. Spannvorrichtung nach einem der Ansprüche 2 bis 7, **dadurch gekennzeichnet, dass** einer der Spannhebelklemmkörper (10), vorzugsweise um einen Achsstift (15), relativ zum Spannhebel (2), vorzugsweise über einen begrenzten Winkelbereich, verschwenkbar am Spannhebel (2) gelagert ist.

9. Verfahren zum Spannen zumindest eines Gurtes (3) mit einer Spannvorrichtung nach einem der Ansprüche 1 bis 8, **dadurch gekennzeichnet, dass** beim Verschwenken des Spannhebels (2) relativ zum Grundkörper (1) in einer Spannrichtung (16) der Gurt (3) von der Spannhebelklemmvorrichtung am Spannhebel (2) festgeklemmt wird und die Öffnungsnase (6) des bewegbaren Grundkörperklemmkörpers (4) vom Gurt (3) aus dem Zwischenraum (7) herausgedrückt wird und dadurch der bewegbare Grundkörperklemmkörper (4) in eine Freigabestellung bewegt, vorzugsweise geschwenkt, wird, in der der Gurt (3) von den Grundkörperklemmkörpern (4,5) freigegeben ist.

10. Verfahren nach Anspruch 9, **dadurch gekennzeichnet, dass** anstelle des Gurtes (3) zumindest ein Seil mit der Spannvorrichtung gespannt und/oder festgeklemmt wird.

## Claims

1. A tensioning device having at least one basic body (1) and at least one tensioning lever (2) pivotably arranged on the basic body (1), wherein on the basic body (1) there are arranged at least two cooperating basic body clamping bodies (4, 5) for the releasable clamping in place of a belt (3) on the basic body (1) and on the tensioning lever (2) there is arranged at least one tensioning lever clamping device for the releasable clamping in place of the belt (3) on the tensioning lever (2) and at least one of the basic body clamping bodies (4) is movably, preferably pivotably, mounted on the basic body (1), **characterised in that** the basic body clamping body (4) movably mounted on the basic body (1) has at least one opening nose (6), wherein in a clamping position of the basic body clamping bodies (4, 5), the opening nose (6) is, for deflection of the belt (3) about the opening nose (6), arranged in an intermediate space (7) between a belt contact surface (8) of the other basic body clamping body (5) and a belt contact surface (9) of the tensioning lever clamping device.

2. A tensioning device according to claim 1, **characterised in that** the tensioning lever clamping device has at least two cooperating tensioning lever clamping bodies (10, 11) for releasable clamping in place of the belt (3) on the tensioning lever (2).

3. A tensioning device according to claim 1 or 2, **characterised in that** the tensioning lever (2) is pivotably arranged on the basic body (1), preferably so as to be removable without tools, in a direct manner or with the interpositioning of a connecting part (12).

4. A tensioning device according to any one of claims 1 to 3, **characterised in that** the belt contact surfaces (8, 9) of the basic body clamping bodies (4, 5) and/or the tensioning lever clamping bodies (10, 11) are curved at least in portions and/or are in the form of intrinsically wavy or serrated surfaces.

5. A tensioning device according to any one of claims 1 to 4, **characterised in that** the movable basic body clamping body (4) and/or the movable tensioning lever clamping body (10) is/are pivotably mounted about an axle pin (13), wherein it is preferably provided that the axle pin (13) is mounted in at least one slot (14) of the movable basic body clamping body (4) or the basic body (1) or alternatively of the movable tensioning lever clamping body (10) or the tensioning lever (2).

6. A tensioning device according to any one of claims 1 to 5, **characterised in that** viewed in cross-section, the movable basic body clamping body (4) and/or the movable tensioning lever clamping body (10) is/are C-shaped and/or in the form of a nine.

7. A tensioning device according to any one of claims 2 to 6, **characterised in that** at least one of the basic body clamping bodies (5) and/or the tensioning lever clamping bodies (11) is/are immovably fixed on the basic body (1) or alternatively the tensioning lever (2) in its/their position relative to the basic body (1) or alternatively the tensioning lever (2).

8. A tensioning device according to any one of claims 2 to 7, **characterised in that** one of the tensioning lever clamping bodies (10) is pivotably mounted on the tensioning lever (2), preferably about an axle pin (15), relative to the tensioning lever (2), preferably over a limited angular range.

9. A method of tensioning at least one belt (3) with a tensioning device according to any one of claims 1 to 8, **characterised in that** upon pivoting of the tensioning lever (2) relative to the basic body (1) in a tensioning direction (16), the belt (3) is clamped in place on the tensioning lever (2) by the tensioning lever clamping device and the opening nose (6) of the movable basic body clamping body (4) is pushed from the intermediate space (7) by the belt (3) and the movable basic body clamping body (4) is thereby moved, preferably pivoted, into a release position in which the belt (3) is released by the basic body clamping bodies (4, 5).

10. A method according to claim 9, **characterised in that** instead of the belt (3), at least one cable is tensioned and/or clamped in place with the tensioning device.

## Revendications

1. Dispositif de mise sous tension comprenant au moins un corps de base (1) et au moins un levier tendeur (2) monté pivotant sur le corps de base (1), au moins deux corps de serrage de corps de base (4, 5) étant disposés sur le corps de base (1) et coopérant ensemble pour serrer de manière réversible une courroie (3) sur le corps de base (1), et au moins un dispositif de serrage de levier tendeur étant disposé sur le levier tendeur (2) pour serrer de façon réversible la courroie (3) sur le levier tendeur (2), et au moins un des corps de serrage de corps de base (4) étant logé mobile, de préférence pivotant, sur le corps de base (1), **caractérisé en ce que** le corps de serrage de corps de base (4) logé mobile sur le corps de base (1) est muni d'au moins un nez d'ouverture (6), lequel nez d'ouverture (6), dans une position de serrage des corps de serrage de corps de base (4, 5), est placé dans un espace libre (7) situé entre une surface de contact de courroie (8) de l'autre corps de serrage de corps de base (5) et une surface de contact de courroie (9) du dispositif de serrage de levier tendeur en vue de dévier la courroie (3) autour du nez d'ouverture (6).

2. Dispositif de mise sous tension selon la revendication 1, **caractérisé en ce que** le dispositif de serrage de levier tendeur est muni d'au moins deux corps de serrage de levier tendeur (10, 11) coopérant ensemble pour serrer de manière réversible la courroie (3) sur le levier tendeur (2).

3. Dispositif de mise sous tension selon la revendication 1 ou 2, **caractérisé en ce que** le levier tendeur (2) est disposé pivotant directement sur le corps de base (1) ou avec interposition d'une pièce de liaison (12), en pouvant être de préférence enlevé sans outil.

4. Dispositif de mise sous tension selon l'une des revendications 1 à 3, **caractérisé en ce que** les surfaces de contact de courroie (8, 9) des corps de serrage de corps de base (4, 5) et/ou des corps de serrage de levier tendeur (10, 11) sont conçues courbées au moins par endroits et/ou sont réalisées sous forme de surfaces en soi ondulées ou dentées.

5. Dispositif de mise sous tension selon l'une des revendications 1 à 4, **caractérisé en ce que** le corps de serrage de corps de base (4) mobile et/ou le corps de serrage de levier tendeur (10) mobile est ou sont monté(s) de manière pivotante autour d'une cheville d'axe (13), l'axe (13) étant de préférence prévu logé dans au moins une fente oblongue (14) du corps de serrage de corps de base (4) mobile ou du corps de base (1) ou respectivement du corps de serrage de levier tendeur (10) mobile ou du levier tendeur (2).

6. Dispositif de mise sous tension selon l'une des revendications 1 à 5, **caractérisé en ce que** le corps de serrage de corps de base (4) mobile et/ou le corps de serrage de levier tendeur (10) mobile est ou sont, considérés en coupe transversale, en forme de C et/ou en forme de neuf.

7. Dispositif de mise sous tension selon l'une des revendications 2 à 6, **caractérisé en ce qu'**au moins l'un des corps de serrage de corps de base (5) et/ou des corps de serrage de levier tendeur (11) est fixé dans sa position par rapport respectivement au corps de base (1) ou au levier tendeur (2) de manière fixe respectivement sur le corps de base (1) ou sur le levier tendeur (2).

8. Dispositif de mise sous tension selon l'une des revendications 2 à 7, **caractérisé en ce que** l'un des corps de serrage de levier tendeur (10) est logé sur le levier tendeur (2) de manière à pouvoir pivoter par rapport au levier tendeur (2), de préférence autour d'une cheville d'axe (15), de préférence sur une plage angulaire limitée.

9. Procédé pour tendre au moins une courroie (3) avec un dispositif de mise sous tension selon l'une des revendications 1 à 8, **caractérisé en ce que**, lorsque le levier tendeur (2) est pivoté par rapport au corps de base (1) dans une direction de mise sous tension (16), la courroie (3) est serrée sur le levier tendeur (2) par le dispositif de serrage de levier tendeur, et le nez d'ouverture (6) du corps de serrage de corps de base (4) mobile est poussé par la courroie (3) hors de l'espace libre (7), et le corps de serrage de corps de base (4) mobile est ainsi déplacé, de préférence pivoté, dans une position de libération dans laquelle la courroie (3) est libérée des corps de serrage de corps de base (4, 5).

10. Procédé selon la revendication 9, **caractérisé en ce qu'**à la place de la courroie (3), au moins un câble est tendu et/ou serré avec le dispositif de mise sous tension.
